# EUROPÄISCHE PATENTSCHRIFT

(11) **EP 0 766 657 B1**
(45) Veröffentlichungstag und Bekanntmachung des Hinweises auf die Patenterteilung: **04.10.2000**
(21) Anmeldenummer: 95923174.7
(22) Anmeldetag: 20.06.1995
(51) Int. Cl.: C04B 41/87, C03C 17/25, C08J 7/06, B01J 21/06, B01D 71/02, C12N 11/14, C04B 37/04, C04B 37/00, C04B 37/02, H01G 9/20

(54) **HERSTELLUNG KERAMISCHER SCHICHTEN UND DEREN VERWENDUNG**
PRODUCTION OF CERAMIC LAYERS AND THEIR USE
PRODUCTION DE COUCHES EN CERAMIQUE ET LEUR UTILISATION

(30) Priorität: 23.06.1994 DE 4421978; 24.10.1994 DE 4437767; 09.11.1994 DE 4439722
(43) Veröffentlichungstag der Anmeldung: 09.04.1997
(73) Patentinhaber: Creavis Gesellschaft für Technologie und Innovation mbH, 45764 Marl (DE)
(72) Erfinder: Penth, Bernd, 66822 Lebach (DE)
(86) Internationale Anmeldenummer: DE9500819
(87) Internationale Veröffentlichungsnummer: WO9600198

(56) Entgegenhaltungen:
- EP-A- 0 358 338
- EP-A- 0 581 216
- WO-A-93/20569
- PATENT ABSTRACTS OF JAPAN vol. 004 no. 054 (C-008) ,23.April 1980 & JP,A,55 024923 (TEIJIN LTD.) 22.Februar 1980,
- PROCEEDINGS OF THE INTERNATIONAL SOCIETY FOR OPTICAL ENGINEERING, Bd. 1758, 20. - 22.Juli 1992 SAN DIEGO, USA, Seiten 67-76, H. HIRASHIMA, T. KUSAKA 'Structure of TiO2 sol-gel coatings'
- THIN SOLID FILMS, Bd. 219, Nr. 1/2, 30.Oktober 1992 LAUSANNE CH, Seiten 18-23, XP 000334896 L. HU ET AL. 'Effects of solvent om properties of sol-gel derived TiO2 coating films'
- DATABASE WPI Week 9145 Derwent Publications Ltd., London, GB; AN 329765 & JP,A,03 221 146 (MITSUBISHI HEAVY IND KK) , 30.September 1991
- YOGYO-KYOKAI-SHI, Bd. 95, Nr. 2, 1987 JAPAN, Seiten 150-155, T. YOKO ET AL. 'Photoelectric properties of TiO2 films prepared by the sol-gel method'
- DATABASE WPI Week 9044 Derwent Publications Ltd., London, GB; AN 330568 & JP,A,02 236 151 (JAPAN ELEC CONTROL SYS) , 19.September 1990
- JOURNAL OF MATERIALS SCIENCE, Bd. 29, Nr. 21, 1994 LONDON GB, Seiten 5773-5778, R. MIZUTANI ET AL. 'Coating of polymethylmethacrylate with transparent SiO2 thin films by a sol-gel method'

## Beschreibung

Das erfindungsgemäße Verfahren beschreibt die Herstellung dünner keramischer Schichten und deren Verwendung.

Die Herstellung dünner keramischer Schichten aus Titandioxid ist bekannt. Die bekannten Verfahren gehen, wie das erfindungsgemäße Verfahren, von einer hydrolysierbaren Titanverbindung aus, hydrolisieren diese und bringen den durch die Hydrolyse ausgefallenen Niederschlag mittels Säure zunächst wieder in Lösung, wodurch man ein Sol erhält. Bis dahin ist das erfindungsgemäße Verfahren identisch mit dem Stand der Technik.

Nach dem Stand der Technik wird das Sol nun in ein Gel umgewandelt. Dies geschieht z.B. durch Eindampfen des Soles. Beim weiteren Eintrocknen des Geles kristallisiert dieses aus und bildet Risse. Deshalb gibt man zum Erreichen einer rißfreien Schicht dem Gel ein Tensid zu. Bei einer Temperatur von etwa 400°C, die naturgemäß über einen längeren Zeitraum eingehalten werden muß, versintern die Titandioxidteilchen miteinander und das Tensid wird verdampft oder zersetzt. Zurück bleibt eine nanokristalline Titandioxidschicht.

Für praktische Anwendungen kann diese energieintensive und zeitraubende Prozedur sehr hinderlich sein, zumal die erreichten Festigkeiten der Titandioxidschichten nicht sehr hoch sind.

Aus der EP-A-0 358 338 ist ein Verfahren zur Oberflächenbehandlung bekannt, das zur Haftverbesserung für aufzubringende Schichten insbesondere auf Metall dient.

Ziel der vorliegenden Erfindung war die Möglichkeit, keramische Titandioxid-Schichten herzustellen, die
- bereits bei einer sehr niedrigen Temperatur
- nach nur kurzer thermischer Behandlung
- eine bessere Festigkeit der Titandioxidschicht ergeben.

Als konkretes Anwendungsgebiet sollte zunächst mit dem erfindungsgemäßen Verfahren die Herstellung von Solarzellen, wie sie in PCT WO 91/16719, PCT WO 93/20569 und anderen beschrieben ist, verbessert werden. Den in den Literaturstellen beschriebenen Verfahren ist gemeinsam, daß für die Herstellung der Arbeitselektroden aus Titandioxid Tenside verwendet werden müssen. Zum Erreichen einer brauchbaren Festigkeit der herzustellenden Titandioxidschicht sind deshalb die bereits beschriebenen nachteiligen Herstellbedingungen erforderlich.

Das oben beschriebene, gesteckte Ziel des erfindungsgemäßen Verfahrens wird dadurch erreicht, daß mit dem durch die Hydrolyse der Titanverbindung entstandenen Sol ein neuer Weg eingeschlagen wird. Das Sol wird zusammen mit nanokristallinem Titandioxid zu einer Dispersion verrührt. Diese Dispersion wird in dünner Schicht auf das zu behandelnde Substrat aufgebracht. Durch die Aufheizung auf 100°C verflüchtigt sich die Salzsäure und das darin enthaltene Wasser. Das im Sol kolloid vorliegende, aus der Hydrolyse stammende Titandioxid wird damit aus dem stabilen gelösten Gleichgewicht gebracht. An den Korngrenzen der zugegebenen, nanokristallinen Titandioxidpartikel bauen sich gleichzeitig Van-der-Waals-Bindungskräfte auf, die bereits nach wenigen Minuten zu einer außerordentlich festen Titandioxidschicht führen.

Das gesteckte Ziel wurde insofern also erreicht, als wesentlich kürzere Heizperioden und wesentlich niedrigere Temperaturen zu besseren Festigkeiten der Titandioxidschichten auf dem jeweiligen Substrat führen.

Ein anderes Anwendungsgebiet, bei dem bislang die herkömmliche Technik der Titandioxidschichtbildung eingesetzt wird, ist die photokatalytische Oxidation von Abwasser. Auch hier wird das Handicap der zu schwachen Bindung der Titandioxidschicht auf einem Glasträger mit dem erfindungsgemäßen Verfahren gelöst.

In weiteren Versuchen hat sich gezeigt, daß auch das Zumischen von Aluminiumoxid, sowohl in kristalliner, als auch in nanokristalliner Form bei den gleichen Bedingungen zu ähnlich guter Haftung führt.

Weiterhin hat sich gezeigt, daß auch das Zumischen anderer Metalloxide zu teilweise recht guten Ergebnissen führt. Vor allem chemische Reaktionen und Löslichkeiten im stark sauren Bereich führen teilweise jedoch zu Mischoxiden, Oxychloriden u.ä.. Eine Brauchbarkeit für besondere Anwendungen wird dadurch jedoch nicht ausgeschlossen. Bei einigen Metalloxiden ist es aufgrund des hohen spezifischen Gewichtes schwierig, die Homogenität der Dispersion aufrechtzuerhalten.

Nachdem sich eine hervorragende Haftung auf Glas und Keramik gezeigt hatte, wurde auch die Haftung auf Metallen überprüft. Auch hier wurden hervorragende Festigkeiten gefunden. Allerdings ist die Schichtdicke wegen unterschiedlicher Ausdehnungskoeffizienten teilweise auf unter 10 µm begrenzt. Titandioxidschichten, aufgebracht auf Aluminiumfolie, haften beispielsweise jedoch auch bei starker mechanischer Beanspruchung der Folie sehr gut. Je dünner die aufgetragene Titandioxidschicht, desto besser die Haftung.

Das Zumischen von Metallpulver ist ebenfalls möglich, wobei aufgrund der teilweise hohen spezifischen Gewichte der Metalle, diese nur schlecht homogen in der Dispersion gehalten werden können.

Wegen der niedrigen Verfestigungstemperatur können nach dem erfindungsgemäßen Verfahren auch keramische Schichten auf Kunststoffsubstrate aufgebracht werden. Die Haftung ist aber wesentlich schlechter als auf Metallen, Glas oder Metall.

Die beste Haftung wird generell bei allen Substraten auf rauhen Oberflächen und porösen Körpern gefunden.

Die entstandenen Schichten selbst erweisen sich als mikroporös und können je nach Zusammensetzung der Oxidschicht für Trennaufgaben in der Membrantechnik herangezogen werden.

Der wesentliche Teil der Erfindung besteht darin, daß nach dem beschriebenen Verfahren reine nanoskalige Titandioxidschichten oder Schichten aus Titandioxid und anderen nanoskaligen Materialien mit guter mechanischer Festigkeit bereits bei Temperaturen von ca. 100° C hergestellt werden können.

Nach dem vorher bekannten Stand der Technik waren zum Erreichen gleicher Festigkeit der Metalloxidschicht Temperaturen oberhalb 400° C erforderlich.

Die auf diese Weise bei niedrigen Temperaturen herstellbaren, keramischen oder keramischmetallischen Schichten sind neben einer Reihe herkömmlicher Anwendungen auch für eine ganze Reihe neuer Anwendungen von Keramik einsetzbar. Möglich ist der Einsatz als katalytisch aktive Schichten, als Sensoren, zum Immobilisieren von Enzymen und Katalysatoren, zur Herstellung photovoltaischer Zellen, zur Herstellung photokatalytischer Schichten sowie der Einsatz als filteraktive Schichten für den Einsatz als Filtermembranen. Durch die gute Haftung auf Metallen ergeben sich Anwendungsmöglichkeiten als temperaturfeste Isolatoren für elektrische Leitungen, aber auch als Kondensatoren mit gesuchten Eigenschaften.

Der Vorteil gegenüber den bekannten Herstellungsverfahren für keramische Schichten besteht erfindungsgemäß also darin, daß das Ziel der Herstellung keramischer Schichten bereits bei milden thermischen Bedingungen erreicht wird. Neben den Einsparungen bei den Herstellungskosten für rein keramische Schichten ergeben sich völlig neue Möglichkeiten, da auch thermisch empfindliche Verbindungen, wie z.B. organische Verbindungen, mit definierten katalytischen, optischen oder elektrischen Eigenschaften im Keramikverbund fest eingeschlossen werden können.

## Patentansprüche

1. Verfahren zur Herstellung keramischer Schichten, dadurch gekennzeichnet, daß eine Dispersion, hergestellt durch
a.) Hydrolyse einer hydrolysierbaren Titanverbindung von 10 bis 40 Gewichtsteilen, mit 5 bis 20 Gewichtsteilen Wasser,
b.) anschließende Peptisierung des gewonnenen Hydrolysates durch Zugabe und Rühren mit einer starken Säure, und
c.) Zugabe zu der so gewonnenen Lösung und Verrühren mit 10 bis 25 Gewichtsteilen Aluminiumoxid wie ALCOA 3000 CT®,
auf einen Träger aus Glas, Metall, Keramik oder Kunststoff aufgebracht wird und auf dem Träger bei einer Temperatur von etwa 100°C, vorzugsweise in einem Heißluftstrom, innerhalb etwa 5 Minuten gefestigt wird.

2. Verfahren gemäß Anspruch 1, dadurch gekennzeichnet, daß der Träger aus porösem Glasvlies oder Sinterglas, poröser Keramik oder Keramikvlies, Metallvlies oder porösem Sintermetall oder Kunststoffvlies oder porösem Sinterkunststoff mit einer bevorzugten Porenweite von 0,5 bis 30 µm aufgebracht wird.

3. Verfahren gemäß Anspruch 1, dadurch gekennzeichnet, daß der Dispersion zusätzlich Titandioxid beigemischt wird.

4. Verfahren gemäß Anspruch 3, dadurch gekennzeichnet, daß der Dispersion zusätzlich Vanadiumoxid und Wolframtrioxid beigemischt werden.

5. Verfahren gemäß Anspruch 3, dadurch gekennzeichnet, daß der Dispersion zusätzlich Eisenoxid beigemischt wird.

6. Verfahren gemäß Anspruch 1, dadurch gekennzeichnet, daß der Dispersion zusätzlich Titanat oder Silikat beigemischt wird.

7. Verfahren gemäß Anspruch 1, dadurch gekennzeichnet, daß der Dispersion zusätzlich Siliziumoxid beigemischt wird.

8. Verfahren gemäß Anspruch 1, dadurch gekennzeichnet, daß der Dispersion zusätzlich Kupferoxid oder Zinkoxid beigemischt wird.

9. Verfahren gemäß Anspruch 1, dadurch gekennzeichnet, daß der Dispersion zusätzlich Eisenoxid oder Chromoxid beigemischt wird.

10. Verfahren gemäß Anspruch 1, dadurch gekennzeichnet, daß der Dispersion zusätzlich Metallpulver aus der Gruppe Nickel, Chrom, Kupfer, Palladium oder Platin beigemischt wird.

11. Verwendung der gemäß den Anspruch 1 hergestellten keramischen Schicht in der Stofftrennung als Membranfilter für die Mikrofiltration, die Ultrafiltration, die Gasseparation und die Umkehrosmose.

12. Verwendung der gemäß den Ansprüchen 2 bis 10 hergestellten Schicht als Katalysator oder Photokatalysator.

## Claims

1. A process for producing ceramic layers, characterized in that a dispersion prepared by
a.) hydrolysing from 10 to 40 parts by weight of a hydrolysable titanium compound with from 5 to 20 parts by weight of water,
b.) subsequently peptizing the hydrolysate obtained by addition of and stirring with a strong acid, and
c.) adding from 10 to 25 parts by weight of aluminium oxide such as ALCOA 3000 CT® to the solution obtained in this way and mixing by stirring,
is applied to a support made of glass, metal, ceramic or plastic and is solidified on the support at a temperature of about 100°C, preferably in a stream of hot air, for about 5 minutes.

2. A process according to claim 1, characterized in that the support comprises a porous glass nonwoven or sintered glass, porous ceramic or ceramic nonwoven, metal nonwoven or a porous sintered metal or plastic nonwoven or a porous sintered plastic having a preferred pore width of from 0.5 to 30 µm.

3. A process according to claim 1, characterized in that titanium dioxide is additionally mixed into the dispersion.

4. A process according to claim 3, characterized in that vanadium oxide and tungsten trioxide are additionally mixed into the dispersion.

5. A process according to claim 3, characterized in that iron oxide is additionally mixed into the dispersion.

6. A process according to claim 1, characterized in that titanate or silicate is additionally mixed into the dispersion.

7. A process according to claim 1, characterized in that silicon oxide is additionally mixed into the dispersion.

8. A process according to claim 1, characterized in that copper oxide or zinc oxide is additionally mixed into the dispersion.

9. A process according to claim 1, characterized in that iron oxide or chromium oxide is additionally mixed into the dispersion.

10. A process according to claim 1, characterized in that metal powder selected from the group consisting of nickel, chromium, copper, palladium and platinum is additionally mixed into the dispersion.

11. The use of a ceramic layer produced according to claim 1 in materials separation as membrane filter for microfiltration, ultrafiltration, gas separation and reverse osmosis.

12. The use of a layer produced according to any of claims 2 to 10 as catalyst or photocatalyst.

## Revendications

1. Procédé de fabrication de couches céramiques, caractérisé par une dispersion obtenue comme suit :
a) hydrolyse de 10 à 40 parties pondérales d'un composé de titane hydrolysable avec 5 à 20 parties en poids d'eau, puis
b) peptisation de l'hydrolisat obtenu par addition d'un acide fort et agitation puis,
c) addition à la solution obtenue avec 10 à 25 parties en poids d'oxyde d'aluminium tel que ALCOA 3000 CT® et agitation,
on applique cette dispersion sur un support en verre, métal, céramique ou matière plastique et on la fixe sur le support à une température d'environ 100°C de préférence dans un courant d'air chaud pendant environ 5 minutes.

2. Procédé selon la revendication 1,
caractérisé en ce que
le support est un non tissé de verre poreux ou du verre fritté, une céramique poreuse ou un non-tissé de céramique, un non-tissé de métal ou un métal fritté poreux ou un non tissé de matière plastique ou de la matière plastique frittée poreuse avec de préférence une dimension de pores de 0,5 à 30 µm.

3. Procédé selon la revendication 1,
caractérisé en ce que
on mélange en plus du dioxyde de titane à la dispersion.

4. Procédé selon la revendication 3,
caractérisé en ce que
on mélange en plus de l'oxydé de vanadium et du trioxyde de tungstène à la dispersion.

5. Procédé selon la revendication 3,
caractérisé en ce qu'
on mélange en plus de l'oxyde de fer à la dispersion.

6. Procédé selon la revendication 1,
caractérisé en ce qu'
on mélange en plus un titanate ou un silicate à la dispersion.

7. Procédé selon la revendication 1,
caractérisé en ce qu'
on mélange en plus de l'oxyde de silicium à la dispersion.

8. Procédé selon la revendication 1,
caractérisé en ce qu'
on mélange en plus de l'oxyde de cuivre ou de l'oxyde de zinc à la dispersion.

9. Procédé selon la revendication 1,
caractérisé en ce qu'
on mélange en plus de l'oxyde de fer ou de l'oxyde de chrome à la dispersion.

10. Procédé selon la revendication 1,
caractérisé en ce qu'
on mélange en plus de la poudre d'un métal du groupe du nickel, chrome, cuivre, palladium ou platine à la dispersion.

11. Application d'une couche céramique fabriquée selon la revendication 1, pour séparer des matières en tant que filtre moléculaire pour la microfiltration, l'ultrafiltration, la séparation gazeuse et l'osmose inverse.

12. Application d'une couche réalisée selon les revendications 2 à 10 comme catalyseur ou photocatalyseur.
